# EUROPÄISCHE PATENTANMELDUNG

(11) **EP 4 198 351 A1**
(43) Veröffentlichungstag der Anmeldung: **21.06.2023**
(21) Anmeldenummer: 21215826.5
(22) Anmeldetag: 20.12.2021
(51) Int. Cl.: F16H 57/04

(54) **GETRIEBE MIT ÖLSPRÜHELEMENT**

(71) Anmelder: Flender GmbH, 46395 Bocholt (DE)
(72) Erfinder: DINTER, Ralf Martin, 45888 Gelsenkirchen (DE)
(74) Vertreter: Michalski Hüttermann & Partner Patentanwälte mbB

(57) **Zusammenfassung**

Getriebe 20 mit einem ein Ölreservoir 28 aufnehmenden Getriebegehäuse 26, mehreren in dem Getriebegehäuse 26 über Lagerstellen 30 drehbar gelagerte Verzahnungselementen 32, wobei in dem Getriebegehäuse 26 ein Ölsprühelement 34 vorgesehen ist, um über das Ölsprühelement 34 die Lagerstellen 30 und/oder die Verzahnungselemente 32 aus dem Ölreservoir 28 zu beölen. Die Ausführungsform, mit einem Getriebe, einem ein Ölreservoir umfassendes Getriebegehäuse und einem Ölsprühelement 34 ermöglicht eine zentrale Öl- bzw. Schmierstoffversorgung über das drehende Ölsprühelement 34. Es kann auf eine aufwändige Verrohrung innerhalb des Getriebegehäuses 26 verzichtet werden.

## Beschreibung

Die Erfindung betrifft Getriebe mit einem ein Ölreservoir aufnehmenden Getriebegehäuse, mehreren in dem Getriebegehäuse über Lagerstellen drehbar gelagerte Verzahnungselementen, wobei das Öl des Ölreservoirs der Schmierung und Kühlung der Verzahnungselemente und der Lagerstellen dient.

Die DE 10 2007 004 965 A1 zeigt eine Ölkreislaufverrohrung in einem Gehäuse eines Getriebes, bei dem das Gehäuse teilweise die Ölkreislaufverrohrung enthält.

Es besteht ein ständiges Bedürfnis die Schmierung und die Kühlung eines Getriebes und dessen Verzahnungselemente und Lagerstellen zu verbessern und zu vereinfachen.

Es ist die Aufgabe der Erfindung Maßnahmen aufzuzeigen, die eine verbesserte und baulich vereinfachte Schmierung und Kühlung eines Getriebes ermöglichen.

Die Lösung der Aufgabe erfolgt durch ein Getriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Getriebe mit einem ein Ölreservoir aufnehmenden Getriebegehäuse, mehreren in dem Getriebegehäuse über Lagerstellen drehbar gelagerte Verzahnungselementen, wobei in dem Getriebegehäuse zumindest ein mit dem Ölreservoir in fluidmäßiger Verbindung stehendes und um eine Drehachse A_{D} drehend angetriebenes Ölsprühelement vorgesehen ist, um über das Ölsprühelement die Lagerstellen und/oder die Verzahnungselemente aus dem Ölreservoir zu beölen.

Das Getriebegehäuse kann mehrteilig aufgebaut sein. Es können beispielsweise zwei über jeweilige Verbindungsflansche gegeneinander gesetzte Gehäusehälften vorgesehen sein. Es kann auch ein hauptsächliches Gehäuseteil vorgesehen sein, gegen das ein Gehäusedeckel gesetzt wird, um ein geschlossenes Getriebegehäuse zu erhalten. Die Gehäusehälften beziehungsweise das Gehäuseteil können wannenförmig ausgebildet sein. Das Getriebegehäuse kann jeweilige Wellendurchführungen für eine Antriebswelle und eine oder mehrere Abtriebswellen ausbilden. An das Getriebegehäuse kann in einem unteren Bereich eine Gehäuseschale angebracht sein, in der zumindest ein Teil der Ölfüllung des Ölreservoirs aufgenommen ist. Die Angaben oben und unten beziehen sich auf das Erdschwerefeld und auf die regelmäßige Einbauposition während des bestimmungsgemäßen Gebrauchs des Getriebes. Das Getriebegehäuse ist insbesondere aus einem metallischen Material, insbesondere einem Gusswerkstoff hergestellt, beispielsweise GJL 200, so dass das Getriebegehäuse einen entsprechen hohen Wärmeleitkoeffizienten aufweisen kann.

Das Ölreservoir ist durch ein Ölvolumen gebildet, das in einem unteren Bereich des Getriebegehäuses aufgenommen ist. In einer alternativen Ausführung kann ein separater Ölvorratsbehälter vorgesehen sein. Der Füllstand des Ölvolumens in dem Ölreservoir kann bei einem bestimmungsgemäßen Gebrauch des Getriebes derart bemessen sein, dass die Verzahnungselemente zumindest zu einem kleinen Teil in das Ölvolumen eintauchen und Öl aufnehmen können. Oberhalb des Füllstandes des Ölvolumens können innerhalb des Getriebegehäuses Ölfangbleche vorgesehen sein, die abtropfendes oder verspritztes Öl auffangen können, um es an weitere zu ölende bzw. zu schmierende Bereiche weiterzuleiten, beispielsweise an Lagerstellen.

Bei den Lagerstellen kann es sich in erster Linie um Wälzlagerungen oder Gleitlagerungen von im Getriebe laufenden Wellen und Verzahnungselementen handeln. Verzahnungselemente können als Stirnräder, Zahnräder eines Planetenradgetriebes, Kegelräder, Ritzel, Schneckenrad und Schnecke oder vergleichbar ausgebildet sind. Die Wellen können über Wälzlager oder Gleitlager unmittelbar oder mittelbar gegenüber dem Getriebegehäuse gelagert sein. Die Verzahnungselemente können beispielsweise gegenüber Wellen drehend gelagert sein. Lagerstellen können allerdings auch zwischen Bauteilen gebildet sein, die zueinander nicht einer relativen Drehung unterworfen sind, beispielsweise Schaltgabel oder andere Bauteile die nur durch eine Linearbewegung zwischen zwei Schaltzuständen bewegt werden.

Ein Ölsprühelement kann insbesondere um eine vertikal verlaufende Drehachse A_{D} drehend angetrieben sein. Hierbei kann ein separates Antriebselement oder auch ein rein fluidbasierter Antrieb vorgesehen sein. Bei bestimmten Anwendungsfällen kann auch vorgesehen sein, dass das Ölsprühelement an einer seitlichen Innenwandung des Getriebegehäuses angeordnet ist und um eine im Wesentlichen horizontale Drehachse A_{D} drehbar ist. Ausgehend von der vertikalen oder einer horizontal Drehachse A_{D} kann eine Sprührichtung definiert werden, die in Richtung der Drehachse A_{D}, d.h. parallel zu dieser, oder in radialer Richtung zu der Drehachse A_{D} oder zwischen diesen beiden Hauptrichtungen, d.h. zwischen 0° und 90° bezogen auf eine Parallele und einen Radius, verläuft. Das Ölsprühelement kann aus einem Blechwerkstoff oder einem temperaturbeständigen Kunststoff gefertigt sein. Das Ölsprühelement kann insgesamt von flacher Gestalt sein. Hierbei ist die horizontale Erstreckung deutlich größer als die vertikale Erstreckung. Es kann ein Verhältnis in einer Größenordnung von 15:1 bis 30:1 vorliegen. Demgegenüber kann eine umfängliche Erstreckung bei dem 4-fachen bis 5-fachen der vertikalen Erstreckung liegen. Bevorzugt ist, dass der Bewegungsraum für das Ölsprühelement innerhalb des Getriebegehäuses ebenfalls klein gehalten ist. Besonders bevorzugt ist, wenn das Ölsprühelement in einen bestehenden Raum des Getriebegehäuse integriert wird. Beispielsweise kann ein Raum zwischen den Getriebekomponenten und der oberen Gehäusewandung als Bewegungsraum für das Ölsprühelement vorgesehen sein.

Bei einem Beölen kann es sich um ein Besprühen, Benetzen, Benebeln, Betreufeln, Schmieren o.ä. handeln. Ein Beölen erfolgt mit einem Schmierstoff, einem Öl oder einem vergleichbaren Stoff, mit dem eine Reibung zwischen zwei gegeneinander bewegte Körper reduziert, minimiert oder weitestgehend aufgehoben werden kann. Über ein Beölen erfolgt auch gleichzeitig immer eine Kühlung des jeweils betroffenen Bauteils beziehungsweise der Komponente. Über das Beölen des Bauteils bzw. der Komponente wird Wärme von dem Öl bzw. dem Schmierstoff aufgenommen und abgeführt. Es kann eine separate Ölkühlvorrichtung vorgesehen sein, welche im Bereich des Ölreservoirs angeordnet sein kann. In einem einfachen Fall kann die Ölkühlvorrichtung als Verrippung beispielsweise eines Bodenbereichs des Getriebegehäuses ausgestaltet sein.

Die Ausführungsform, mit einem Getriebe, einem ein Ölreservoir umfassendes Getriebegehäuse und einem Ölsprühelement ermöglicht eine zentrale Öl- bzw. Schmierstoffversorgung über das drehende Ölsprühelement. Es kann auf eine aufwändige Verrohrung innerhalb des Getriebegehäuses verzichtet werden, insbesondere wenn eine reine Ölsumpfschmierung, bei der eine Beölung lediglich durch Eintauchen von sich bewegenden Getriebebauteilen in das Volumen des Ölreservoirs erfolgt, eine nicht ausreichende Beölung und/oder Kühlung der Verzahnungen und Lagerstellen ermöglicht. Das drehende Ölsprühelement eignet sich auch und insbesondere für eine Beölung bei einem niedrigen Füllstand das Ölvolumens innerhalb des Ölreservoirs. Hierdurch können Planschverluste deutlich reduziert oder sogar weitestgehend vermieden werden. Das drehend angetriebene Ölsprühelement ist während der Beölung einer Drehung unterworfen, so dass das Öl bzw. das Schmiermittel das Ölsprühelement verlässt, während dieses sich dreht. Hierdurch wird erreicht, dass dem Öl bzw. dem Schmiermittel eine Zentrifugalkaft aufgeprägt wird. Hierdurch ist es möglich dem Öl bzw. Schmiermittel gezielt eine Reichweite ausgehend von der Drehachse A_{D} aufzuprägen. Infolge der Drehung und der Zentrifugalkraft kann sich ein kreisförmiges Sprühbild um die Drehachse A_{D} bzw. das Ölsprühelement ergeben.

In einer bevorzugten Ausgestaltung ist vorgesehen, dass ein Ölsprühelement eine Mehrzahl einzelner Sprühdüsen ausbildet. Es kann vorgesehen sein, dass die Sprühdüsen in zueinander unterschiedlichen winkligen Ausrichtungen auf dem Ölsprühelement angeordnet sind. Hierdurch ist es möglich ein sehr differenziertes Sprühbild zu erzeugen und eine Beölung auf verschiedene in unterschiedlichen Bereichen des Gehäuses angeordnete Verzahnungen und Lagerstellen zu richten.

In einer bevorzugten Ausgestaltung ist vorgesehen, dass ein Ölsprühelement bezüglich der Drehachse A_{D} rotationssymmetrisch ausgebildet ist. Dies bietet kinematische Vorteile, da über die Rotationssymmetrie ein zumindest weitgehend gewuchtetes Bauteil bereitgestellt werden kann, das lediglich geringe dynamische Massenkräfte in die Drehaufhängung in der Drehachse A_{D} einbringt. Infolge der Rotationssymmetrie ist es denkbar, das Ölsprühelement aus zwei gleichen oder zumindest komplementären Einzelteilen zusammenzusetzen und hierdurch die Fertigung und die Montage zu vereinfachen.

In einer bevorzugten Ausgestaltung ist vorgesehen, dass eine Ölförderpumpe zur Förderung eines Ölvolumens aus dem Ölreservoir zu dem Ölsprühelement bereitgestellt wird. Über die Ölförderpumpe kann der Öldruck, die an dem bzw. in dem Ölsprühelement anliegt, gezielt eingestellt und variiert werden. In einer möglichen Ausgestaltung kann vorgesehen sein, dass die Ölförderpumpe über eine mechanische Kopplung mit einer im Getriebe laufenden Wellen oder mittelbar mit einem Verzahnungselement in einer Antriebsverbindung steht. Alternativ kann vorgesehen sein, dass die Ölförderpumpe elektrisch betrieben und geregelt ist. In einer möglichen Ausgestaltung ist ein mit dem Ölsprühelement und mit der Ölförderpumpe in jeweiliger Wirkverbindung stehendes Drehantriebselement vorgesehen, um das Ölsprühelement aktiv mit einer Drehung zu beaufschlagen. Das Drehantriebselements ist derart ausgeführt, dass ein Volumenstrom, der die Ölförderpumpe erzeugt wird und zu dem Sprühdüsen des Ölsprühelements verläuft, eine Abtriebsseite des Ölsprühelements in Rotation versetzt, die auf das Ölsprühelement übertragen werden. Das Drehantriebselement kann beispielsweise als Turbinenrad ausgeführt sein und bevorzugt im Bereich der Drehlagerung des Ölsprühelements angeordnet sein.

In einer besonders bevorzugten und vorteilhaften Ausgestaltung ist vorgesehen, dass das Ölsprühelement als ein gegenüber einer Innenwandung des Getriebegehäuses drehbar gehaltener, bevorzugt zweiflügeliger, Sprüharm ausgebildet ist. Hierbei kann der Sprüharm insbesondere in Richtung der Drehachse A_{D} im Wesentlichen flach ausgebildet sein, um sich hierdurch in einen knappen Bauraum integrieren zu können. Ein geeigneter Sprüharm ist in der DE 10 2007 041 299 A1 beschrieben.

Im Hinblick auf den drehenden Antrieb des Ölsprühelements kann bevorzugt vorgesehen sein, dass zumindest ein Teil der Sprühdüsen bezüglich eines während einer Drehung beschriebenen Umfangs in einer Umfangsrichtung entgegen der Drehumfangsrichtung winklig angestellt sind. Hierdurch ergibt sich in vorteilhafter Weise ein passiver Drehantrieb des Ölsprühelements, wobei dieser passive Drehantrieb zumindest in Bereichen proportional zu dem Volumenstrom sein kann, mit dem das Öl aus dem Ölreservoir zu den Sprühdüsen gefördert wird. Der passive Drehantrieb über die winklig angestellten Sprühdüsen kann bei gewissen Anwendungen ausreichend sein, so dass auf das separate durch den Volumenstrom des Öls angetriebene, beispielsweise als Turbinenrad ausgeführte, Drehantriebselement verzichtet werden kann. Für andere Anwendungen wiederum kann es zweckmäßig sein, wenn sowohl die winklig angestellten Sprühdüsen als passiver Drehantrieb und das öldurchströmte Drehantriebssystem zum Einsatz kommen.

Eine Ausgestaltung, bei der eine Querschnittsöffnungsfläche zumindest einer Sprühdüse bezüglich ihrer Größe veränderlich ausgebildet ist, wird als besonders vorteilhaft angesehen. Hierdurch ist es möglich die einem bestimmten Bauteil oder Komponente des Getriebes zugemessene Ölmenge zur Beölung zu variieren bzw. anzupassen. Auch kann beispielsweise vorgesehen sein, dass die Querschnittsöffnungsfläche einer oder mehrerer Sprühdüsen in Abhängigkeit ihrer momentanen Umfangsposition veränderlich ausgeführt ist. In praktischer Ausgestaltung kann vorgesehen sein, dass ein mit dem Ölsprühelement in einer Wirkverbindung stehendes bimetallisches Element vorgesehen ist, um über das bimetallische Element die Querschnittsöffnungsfläche der zumindest einen Sprühdüse bezüglich ihrer Größe zu stellen. Hierdurch ist eine temperaturabhängige Vergrößerung oder Verkleinerung der Querschnittsöffnungsfläche möglich, um den Volumenstrom und den Öldruck an die temperaturabhängige Viskosität des Öls anzupassen.

In einer zudem bevorzugten Ausgestaltung ist vorgesehen, dass zumindest ein mit dem Ölsprühelement in einer Wirkverbindung stehendes Kurvengetriebe vorgesehen ist, um über das Kurvengetriebe die Querschnittsöffnungsfläche der zumindest einen Sprühdüse zwischen einer geöffneten Stellung und einer geschlossenen Stellung zu stellen und/oder über das Kurvengetriebe ein Abstandsmaß zumindest einer Sprühdüse gegenüber der Drehachse A_{D} in Abhängigkeit der Drehung um die Drehachse A_{D} zu variieren. Hierbei kann für jede der beiden Funktionalitäten - Stellen zwischen einer geöffneten und geschlossenen Stellung und Variieren des Abstandsmaßes - ein eigenes Kurvengetriebe vorgesehen sein. Alternativ kann allerdings auch für beide Funktionalitäten ein einziges Kurvengetriebe vorgesehen sein.

Eine besonders bevorzugte Ausgestaltung sieht vor, dass eine Innenwandung des Getriebegehäuses bereichsweise, bevorzugt mehrfach bereichsweise, als Ölkanal ausgebildet ist, wobei der Ölkanal bevorzugt in einer oder in mehreren zumindest einer Lagerstelle zugeordneten Schmieröltaschen mündet. Die Schmieröltaschen können hierbei trichterförmig ausgebildet sein, so dass über eine große Öffnung ausreichend versprühtes Öl aufgefangen werden kann. Die Weiterleitung des aufgefangenen Öls kann an eine oder mehrere Lagerstellen erfolgen. Hierzu kann sich eine Schmieröltasche in ihrem sich verengenden Bereich in mehrere Zuleitungskanäle aufteilen. Der oder die Ölkanäle und die durch ihn zumindest teilweise gebildete Schmieröltasche kann in Richtung des Gehäuseinneren offen, bevorzugt hinterschnittfrei, ausgebildet sind. Hierdurch ist es möglich, den oder die Ölkanäle bzw. die Schmieröltaschen unmittelbar über einen Gußvorgang des Getriebegehäuses vorzusehen. Alternativ ist es auch denkbar, dass die Ölkanäle bzw. die Schmieröltaschen über separate Bauteile, beispielsweise als Formblechteile, innerhalb des Getriebegehäuse dargestellt werden.

Die Aufgabenstellung wird zudem gelöst durch eine Industrie-Applikation, die ein Antriebsmittel aufweisen kann, das beispielsweise als elektrische Maschine, Brennkraftmaschine, Hydraulikmotor ausgestaltet sein kann. Das Antriebsmittel kann mit einem Getriebe zur Wandlung eines Drehmoments und einer Drehzahl der von dem Antriebsmittel erzeugten Leistung gekoppelt sein, wobei das Getriebe wie vorstehend beschrieben aus- und weitergebildet sein kann und insbesondere in seinem Getriebegehäuse ein mit einem Ölreservoir in fluidmäßiger Verbindung stehendes und um eine Drehachse A_{D} drehend angetriebenes Ölsprühelement umfasst, um über das Ölsprühelement Lagerstellen und/oder Verzahnungselemente des Getriebes aus dem Ölreservoir zu beölen. Das Getriebe der Industrie-Applikation kann wiederum drehmomentübertragend mit einer mechanischen Anwendung gekoppelt sein, in der über das Getriebe eingeleitete bzw. übertragene mechanische Energie genutzt werden kann. Bei der mechanischen Anwendung handelt es sich beispielsweise um ein Förderband, Pumpe, Kran, Lüfter, Rührwerk, Hubvorrichtung, sofern bei diesen Anwendungen ein Stirnradgetriebe oder ein Kegelstirnradgetriebe zum Einsatz kommt.

Die Lösung der zugrundeliegende Aufgabenstellung erfolgt zudem durch ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen des Ölsprühelements des vorstehend beschriebenen Getriebes, wobei die Datenpakete dazu hergerichtet sind bei einer Verarbeitung durch eine Datenverarbeitungseinrichtung eine additive Herstellung der Bestandteile des Ölsprühelements, insbesondere durch 3D-Druck mittels eines 3D-Druckers, und/oder eine Simulation der Funktionsweise des Getriebes mit dem Ölsprühelement durchzuführen. Dies ermöglicht eine kostengünstige Herstellung von Prototypen und/oder computerbasierten Simulationen, um die Funktionsweise des Getriebes zu studieren, Probleme im konkreten Anwendungsfall zu identifizieren und Verbesserungen zu finden. Ein 3D Druck des Ölsprühelements hat den Vorteil. dass die Einzelteile des Ölsprühelements bereits in der zusammengesetzten bzw. montierten Position zueinander gedruckt werden können. Dies betrifft im Einzelnen beispielsweise ein Gehäuse des zweiflügeligen Sprüharms, einen Schieber für die Veränderung der Querschnittsöffnungsfläche der Sprühdüse, ein Kurvengetriebe, ein Turbinenrad oder eine Lagerung für den Arm etc. Nach erfolgtem 3D-Druck erhält man ein voll oder zumindest weitestgehend funktionsfähiges Bauteil ohne den sonst erforderlichen Montageaufwand.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine prinzipmäßige Darstellung einer Industrie-Applikation,
Fig. 2: eine schematische Darstellung eines Getriebes mit einem als Sprüharm ausgeführten Ölsprühelement und
Fig. 3a) bis 3c): schematische Detaillierungen eines als Sprüharm ausgeführten Ölsprühelement.

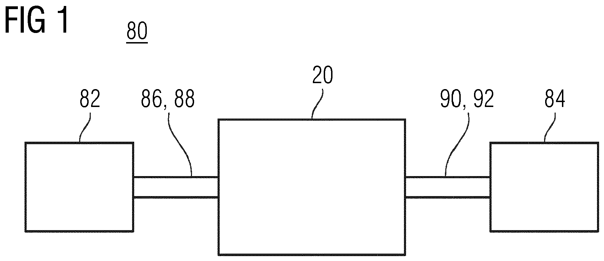

Eine Ausführungsform einer Industrie-Applikation 80 ist in Fig. 1 dargestellt. Die Industrie-Applikation 80 umfasst ein Antriebsmittel 82, das beispielsweise als Elektromotor, als Verbrennungsmotor oder als Hydraulikmotor ausgebildet ist. Das Antriebsmittel 82 ist drehmomentübertragend mit einem Getriebe 20 gekoppelt, das wiederum mit einer mechanischen Anwendung 84 verbunden ist. Das Antriebsmittel 82 ist zum Abgeben einer Antriebsleistung 86 ausgebildet, die über eine Leistungswelle 88 dem Getriebe 20 zugeführt wird. Durch das Getriebe 20 wird die eingehende Antriebsleistung 86, unter Berücksichtigung von Reibungsverlusten, bezüglich Drehzahl und Drehmoment gewandelt und als Ausgangsleistung 90 über eine Leistungswelle 21 an die mechanische Anwendung 84 weitergeleitet. Dabei ist die Drehzahl an der ersten Leistungswelle 88 niedriger als an der zweiten Leistungswelle 92. Das Getriebe 20 kann beispielsweise als Stirnradgetriebe oder als Kegelstirnradgetriebe ausführt sein. Die mechanische Anwendung 84 kann als Förderband, Pumpe, Kran, Lüfter, Rührwerk, Hubvorrichtung ausgebildet sein.

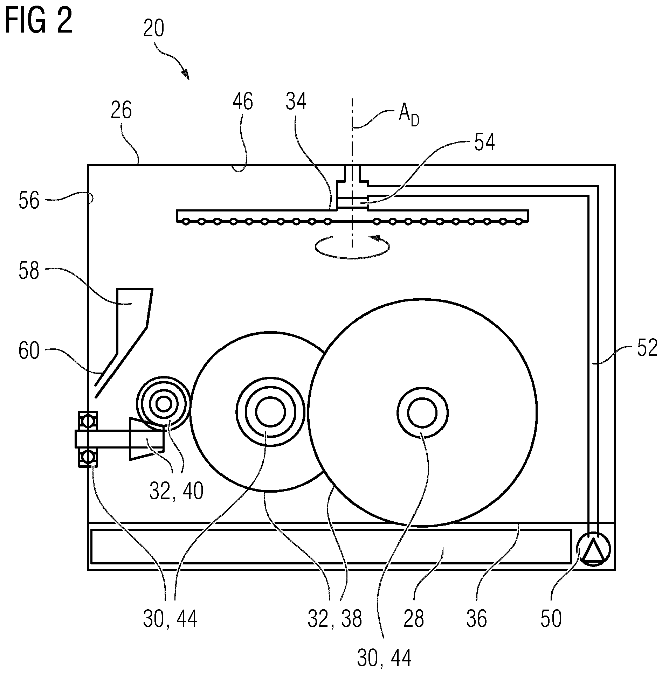

Die Fig. 2 zeigt ein Getriebe 20 mit einem Getriebegehäuse 26, in dem in einem unteren Bereich ein Ölreservoir 28 vorgesehen ist, in dem ein Ölvolumen oder Schmiermittelvolumen bis zu einem Füllstand 36 gehalten ist. In dem Getriebegehäuse 26 sind ferner Verzahnungselemente 32 aufgenommen, die über Lagerstellen 30 gegenüber dem Getriebegehäuse 26 gehalten und drehbar gelagert sind. Rein exemplarisch sind die Verzahnungselemente 32 als Kegelräder 40 und als Stirnräder 38 dargestellt. Die Lagerstellen 30 sind ebenfalls rein exemplarisch als Wälzlager 44 dargestellt, über die die Kegelräder 40 und Stirnräder 38 mittelbar über Wellen gegenüber dem Getriebegehäuse 26 gelagert sind.

In dem Getriebegehäuse 26 ist ein mit dem Ölreservoir 28 in fluidmäßiger Verbindung stehendes und um eine Drehachse A_{D} drehend angetriebenes Ölsprühelement 34 vorgesehen. Über das Ölsprühelement 34 können die Lagerstellen 30 und die Verzahnungselemente 32, 38, 40 aus dem Ölreservoir 28 beölt werden. Das Ölsprühelemente 34 ist vorliegend hängend in geeigneter Weise an einer oberen Innenwandung 46 des Getriebegehäuses 26 um eine Drehachse A_{D} drehend angebracht. Das Ölsprühelement 34 ist vorliegend als zweiflügeliger Sprüharm ausgeführt, wobei dieser insbesondere rotationssymmetrisch bezüglich der Drehachse A_{D} ausgebildet ist.

Das Ölsprühelement 34 bildet eine Mehrzahl einzelner Sprühdüsen 48 aus, wobei auf jedem der zwei Flügel des zweiflügeligen Sprüharms ein gleiche Anzahl Sprühdüsen 48 angeordnet sein können. Es ist dargestellt, dass die Sprühdüsen 48 nach unten in den Raum des Getriebegehäuses 26 gerichtet sind. Alternativ oder insbesondere zusätzlich kann auch vorgesehen sein, dass eine oder mehrere Sprühdüsen 48 nach oben in Richtung der oberen Innenwandung 46 gerichtet sind. Zudem ist eine Ölförderpumpe 50 zur Förderung eines Ölvolumens aus dem Ölreservoir zu dem Ölsprühelement 34 vorgesehen. Die Ölförderpumpe 50 ist über eine Ölsteigleitung 52 mit dem Ölsprühelement 34 fluidtechnisch verbunden. Elektrischen Anschlüsse für die Ölförderpumpe 50 sind nicht dargestellt. Es kann ein mit dem Ölsprühelement 34 und mit der Ölförderpumpe 50 in jeweiliger Wirkverbindung stehendes Drehantriebselement 56 vorgesehen sein, um das Ölsprühelement 34 mit einer Drehung um die Drehachse A_{D} zu beaufschlagen. Das Drehantriebselement 56 kann als Turbinenrad ausgeführt sein. Alle oder ein Teil der Sprühdüsen 48 sind bezüglich eines während einer Drehung beschriebenen Umfangs in einer Umfangsrichtung entgegen der Drehumfangsrichtung winklig angestellt. Die vorliegend linke Innenwandung 56 des Getriebegehäuses 26 ist bereichsweise, bevorzugt mehrfach bereichsweise, als Ölkanal 58 ausgebildet ist, wobei der Ölkanal 58 in einer Schmieröltasche 60 des Wälzlagers 44 mündet.

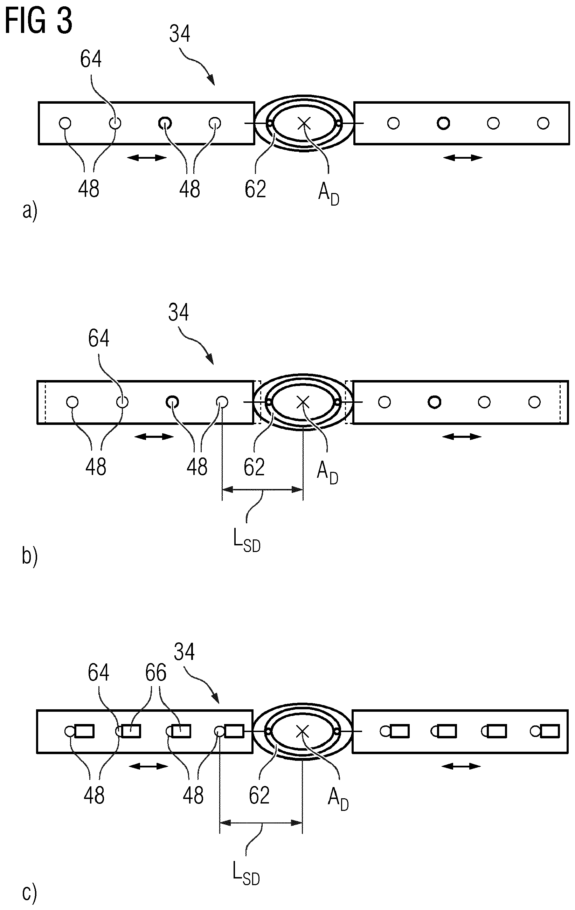

Die Figuren 3a), 3b) und 3c) zeigen Detaillierungen des als Sprüharms ausgebildeten Ölsprühelements 34. Die Figur 3a) zeigt eine Ausführung, bei der ein Kurvengetriebe 62 vorgesehen ist, über das die Querschnittsöffnungsfläche 64 eine oder mehrere Sprühdüsen 48 zwischen einer geöffneten Stellung und einer geschlossenen Stellung gestellt werden können. Die Figur 3b) zeigt eine Ausführung, bei der mit dem Kurvengetriebe 62 ein Abstandsmaß L_{SD} der Sprühdüsen 48 gegenüber der Drehachse A_{D} in Abhängigkeit der Drehung um die Drehachse A_{D} variiert werden kann. Die Figur 3c) zeigt eine Ausführung, bei der eine Querschnittsöffnungsfläche 64 zumindest einer Sprühdüse 48 bezüglich ihrer Größe veränderlich ausgebildet ist. Hierfür sind ein oder mehrere mit dem Ölsprühelement 34 in einer Wirkverbindung stehende bimetallische Elemente 66 vorgesehen.

## Patentansprüche

1. Getriebe (20) mit
einem ein Ölreservoir (28) aufnehmenden Getriebegehäuse (26),
mehreren in dem Getriebegehäuse (26) über Lagerstellen (30) drehbar gelagerte Verzahnungselementen (32),
wobei in dem Getriebegehäuse (26) zumindest ein mit dem Ölreservoir (28) in fluidmäßiger Verbindung stehendes und um eine Drehachse A_{D} drehend antreibbares Ölsprühelement (34) vorgesehen ist, um über das Ölsprühelement (34) die Lagerstellen (30) und/oder die Verzahnungselemente (32) aus dem Ölreservoir (28) zu beölen.

2. Getriebe (20) nach Anspruch 1, **dadurch gekennzeichnet, dass** das zumindest eine Ölsprühelement (34) eine Mehrzahl einzelner Sprühdüsen (48) ausbildet.

3. Getriebe (20) nach Anspruch 1 oder 2, **dadurch gekennzeichnet, dass** das zumindest eine Ölsprühelement (34) bezüglich der Drehachse A_{D} rotationssymmetrisch ausgebildet ist.

4. Getriebe (20) nach einem der Ansprüche 1 bis 3, **dadurch gekennzeichnet, dass** eine Ölförderpumpe (50) zur Förderung eines Ölvolumens aus dem Ölreservoir (28) zu dem zumindest einen Ölsprühelement (34) vorgesehen ist.

5. Getriebe (20) nach Anspruch 4, **dadurch gekennzeichnet, dass** ein mit dem zumindest einen Ölsprühelement (34) und mit der Ölförderpumpe (50) in jeweiliger Wirkverbindung stehendes Drehantriebselement (56) vorgesehen ist, um das zumindest eine Ölsprühelement (34) mit einer Drehung zu beaufschlagen.

6. Getriebe (20) nach einem der Ansprüche 1 bis 5, **dadurch gekennzeichnet, dass** das zumindest eine Ölsprühelement (34) als ein gegenüber einer Innenwandung (46) des Getriebegehäuses (26) drehbar gehaltener, bevorzugt zweiflügeliger, Sprüharm ausgebildet ist.

7. Getriebe (18) nach Anspruch 5 und 6, **dadurch gekennzeichnet, dass** zumindest ein Teil der Sprühdüsen (48) bezüglich eines während einer Drehung beschriebenen Umfangs in einer Umfangsrichtung entgegen der Drehumfangsrichtung winklig angestellt sind.

8. Getriebe (20) nach einem der Ansprüche 5 und 6 oder 7, **dadurch gekennzeichnet, dass** eine Querschnittsöffnungsfläche (64) zumindest einer Sprühdüse (48) bezüglich ihrer Größe veränderlich ausgebildet ist.

9. Getriebe (20) nach Anspruch 8, **dadurch gekennzeichnet, dass** ein mit dem Ölsprühelement (34) in einer Wirkverbindung stehendes bimetallisches Element (66) vorgesehen ist, um über das bimetallische Element (66) die Querschnittsöffnungsfläche (64) der zumindest einen Sprühdüse (48) bezüglich ihrer Größe zu stellen.

10. Getriebe (20) nach Anspruch 8 oder 9, **dadurch gekennzeichnet, dass** zumindest ein mit dem Ölsprühelement (34) in einer Wirkverbindung stehendes Kurvengetriebe (62) vorgesehen ist, um über das Kurvengetriebe (62) die Querschnittsöffnungsfläche (64) der zumindest einen Sprühdüse (48) zwischen einer geöffneten Stellung und einer geschlossenen Stellung und zumindest einer Zwischenstellung zu stellen und/oder über das Kurvengetriebe (62) ein Abstandsmaß zumindest einer Sprühdüse (48) gegenüber der Drehachse A_{D} in Abhängigkeit der Drehung um die Drehachse A_{D} zu variieren.

11. Getriebe (20) nach einem der Ansprüche 1 bis 10, **dadurch gekennzeichnet, dass** eine Innenwandung des Getriebegehäuses (26) bereichsweise, bevorzugt mehrfach bereichsweise, als Ölkanal (58) ausgebildet ist, wobei der Ölkanal (58) bevorzugt in einer oder in mehreren zumindest einer Lagerstelle (30) zugeordneten Schmieröltaschen (60) mündet.

12. Industrieapplikation (80), umfassend ein Antriebsmittel (82), das drehmomentübertragend mit einem Getriebe (20) verbunden ist, wobei das Getriebe (20) drehmomentübertragend mit einer mechanischen Anwendung (84) gekoppelt ist, **dadurch gekennzeichnet, dass** das Getriebe (20) nach einem der Ansprüche 1 bis 11 ausgebildet ist.

13. Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen des Ölsprühelements (34) des Getriebes (20) nach einem der Ansprüche 1 bis 11 vorgesehenen Bestandteile, wobei die Datenpakete dazu hergerichtet sind bei einer Verarbeitung durch eine Datenverarbeitungseinrichtung eine additive Herstellung der Bestandteile des Ölsprühelements (20), insbesondere durch 3D-Druck mittels eines 3D-Druckers, und/oder eine Simulation der Funktionsweise des Getriebes (20) durchzuführen.
